# EUROPÄISCHE PATENTSCHRIFT

(11) **EP 0 919 961 B1**
(45) Veröffentlichungstag und Bekanntmachung des Hinweises auf die Patenterteilung: **11.06.2003**
(21) Anmeldenummer: 98116431.2
(22) Anmeldetag: 31.08.1998
(51) Int. Cl.: G07D 7/00

(54) **Sicherheitselement für Dokumente und Verfahren zu seiner Herstellung**
Security element for documents and method for its manufacture
Elément de sécurité pour documents et son procédé de fabrication

(30) Priorität: 27.11.1997 DE 19752704; 09.03.1998 DE 19810134
(43) Veröffentlichungstag der Anmeldung: 02.06.1999
(73) Patentinhaber: BUNDESDRUCKEREI GmbH, D-10958 Berlin (DE)
(72) Erfinder: Lang, Christian, 85652 Pliening (DE); De Jongh, Rudi, 83026 Rosenheim (DE); Dausmann, Günther, 85435 Erding (DE); Hoeppner, Harald, 12309 Berlin (DE); Löer, Thomas, 10961 Berlin (DE); Märtens, Detlef, 13599 Berlin (DE)
(74) Vertreter: Zinnecker, Armin, Dipl.-Ing.

(56) Entgegenhaltungen:
- US-A- 4 761 543
- US-A- 4 832 445
- US-A- 5 101 184
- US-A- 5 221 957

## Beschreibung

Die Erfindung betrifft ein Dokument mit einem Substrat und einem Sicherheitselement, das ein optisches Gitter umfaßt, sowie ein Sicherheitselement für ein derartiges Dokument. Die Erfindung betrifft ferner ein Verfahren zur Herstellung eines derartigen Dokuments oder Sicherheitselements.

Bei Dokumenten verschiedenster Art, beispielsweise bei Banknoten, Wertpapieren und ähnlichen Dokumenten ist oftmals ein Sicherheitselement erforderlich, das einen Kopierschutz bieten soll. Sicherheitselemente dieser Art, die ein optisches Gitter umfassen, sind bereits bekannt. Bei den bisher bekannten Lösungen werden optische Gitter verwendet, die als Oberflächenrelief ausgestaltet sind. Der durch sie erreichbare Kopierschutz ist jedoch nicht in allen Fällen ausreichend.

In US 4,761,543 ist das Verändern des Informationsgehaltes eines Hologrammes durch Hitzeeinwirkung beschrieben. EP 0 105 099 A1 und US 4,568,141 beschreiben Dokumente mit beugungsoptischen Elementen, die durch Beugung des einfallenden Lichtes Farbmuster erzeugen. Die beschriebenen Farbmuster bewegen sich bei Drehung des Dokumentes entlang einer bestimmten Bahn, wobei diese Bewegung von der Beleuchtungs- und Beobachtungsrichtung weitgehend unabhängig ist. Die beschriebenen beugungsoptischen Elemente sind Prägehologrammstrukturen.

Ein Sicherheitselement mit den Merkmalen des Oberbegriffes des Anspruches 1 ist aus US 5,101,184 bekannt.

Hiervon ausgehend liegt der Erfindung die Aufgabe zugrunde, den Kopierschutz bei Sicherheitselementen bzw. bei Dokumenten mit einem Sicherheitselement zu verbessern.

Diese Aufgabe wird mit einem Sicherheitselement mit den Merkmalen des Anspruches 1, einem Dokument mit den Merkmalen des Anspruches 3 bzw. einem Verfahren mit den Merkmalen des Anspruches 4 gelöst. Die Unteransprüche sind auf vorteilhafte Ausgestaltungen gerichtet.

Bei der Herstellung eines Volumenhologramms wird ein Film oder ein anders komloses transparentes lichtempfindliches Medium mit kohärentem Licht, insbesondere Laserlicht, belichtet. Durch die Interferenz im Filmmaterial entstehen Bragg'sche Netzebenen, die die in das Hologramm eingeschriebenen Informationen verkörpern.

Der verbesserte Kopierschutz von Volumenhologrammen beruht zum einen darauf, daß derartige Volumenhologramme nur monochrom (einfarbig) rekonstruiert werden können. Wenn also versucht wird, ein Volumenhologramm zu kopieren, kann dies nur gelingen, wenn die genau gleiche Wellenlänge des kohärenten Lichts bzw. Laserlichts wie bei der Aufnahme des Volumenhologramms verwendet wird. Selbst dann gelingt der Kopiervorgang nur, wenn im Filmmaterial kein örtliches Schrumpfen oder Schwellen nach dem Aufnehmen des Volumenhologramms erfolgt ist. Hiervon ausgehend kann ein zusätzlicher Kopierschutz dadurch erreicht werden, daß örtliche Bereiche des Volumenhologramms, die ansonsten nicht erkennbar sind, nach der Aufnahme des Volumenhologramms geschrumpft und/oder geschwollen werden, so daß sich die Bragg'schen Netzebenen in diesen Bereichen entsprechend verändern. Von einem derartigen Volumenhologramm könnte nur durch eine Anpassung der Wellenlänge eine Kopie mit holographischen Mitteln angefertigt werden, was jedoch nicht möglich ist, da die örtlichen Bereiche, in denen die Bragg'schen Netzebenen verändert worden sind, nach außen nicht erkennbar sind. Dies bedeutet, daß bei einem nur örtlichen oder inhomogenen Schrumpfen oder Schwellen der Schichten (Netzebenen) das Volumenhologramm nur punktweise oder pixelweise kopiert werden könnte, was einen so hohen Aufwand mit sich bringt, daß es aus wirtschaftlichen Gründen nicht mehr interessant ist.

Zum anderen wird der erhöhte Kopierschutz dadurch erreicht, daß die Beugungsgitter in Volumenhologrammen sehr winkelselektiv sind. Dies bedeutet, daß das Volumenhologramm nur dann kopiert werden kann, wenn genau derselbe Belichtungswinkel wie bei der Aufnahme angewendet wird. Selbst dann ist das Volumenhologramm jedoch - wenn überhaupt - nur mit größten Schwierigkeiten zu kopieren, wenn es auf eine Oberfläche appliziert worden ist, die nicht exakt eben ist, wenn es also beispielsweise auf einem Dokument aus Papier oder einer anderen nicht exakt ebenen Oberfläche aufgebracht worden ist. Hierdurch weisen örtliche Teilbereiche der Oberfläche geringfügig voneinander abweichende Winkel auf, wobei bereits kleine Winkelunterschiede genügen, um ein Kopieren unmöglich zu machen. Durch die Winkelunterschiede, die durch die Oberflächenrauhigkeit entstehen, kann mit einer ebenen Welle nicht das gesamte Hologramm rekonstruiert werden. Dies hat im Falle eines Kopierversuches zur Folge, daß nur Teile des Volumenhologramms kopiert werden und daß das kopierte Hologramm an den Stellen, an denen keine Rekonstruktion des Volumenhologramms erfolgte, unbelichtet bleibt oder zumindest eine deutliche farbliche Abweichung bzw. Helligkeitsvariation auftritt.

In das Volumenhologramm wird ein kinetischer oder kinematografischer Effekt eingebracht bzw. eingeschrieben. Hierdurch ist ein wesentlich höherer Kopierschutz erreichbar. Zur Erzeugung derartiger kinetischer Effekte ist die Beugungsstruktur in dem Volumenhologramm derart, daß sich bei einer gegebenen Beleuchtungs- und Beobachtungsrichtung einstellende Muster bezüglich eines mit dem Substrat fest verbundenen Koordinatensystems mit vorbestimmter Geschwindigkeit entlang einer vorbestimmten Bahn bewegen, wenn das Substrat vorzugsweise in seiner Ebene bewegt wird, beispielsweise in einem bestimmten Drehsinn und mit einer bestimmten Geschwindigkeit gedreht wird. Durch das Einbringen derartiger kinetischer Effekte in Volumenhologramme kann das Nachahmen dieser Hologramme erschwert werden. Ferner kann dadurch ein höherer Wiedererkennungswert geschaffen werden. Außerdem können durch verschiedene Einzelbelichtungen individuelle Daten mit in das Volumenhologramm einbelichtet werden, wodurch der Sicherheitswert des Sicherheitselements noch weiter vergrößert werden kann.

Eine vorteilhafte Weiterbildung ist dadurch gekennzeichnet, daß das Volumenhologramm mit zwei oder mehr verschiedenen Wellenlängen hergestellt worden ist. Hierdurch kann ein kontrollierter Mehrfarbeffekt erreicht werden. Der kontrollierte Mehrfarbeffekt kann bereits bei der Verwendung von zwei verschiedenen Wellenlängen erzielt werden. Bei der Verwendung von mindestens drei verschiedenen Wellenlängen, die Farben entsprechen, die im Farbdreieck liegen, kann ein kontrollierter Echtfarbeneffekt erreicht werden. Dies ist mit den vorbekannten Oberflächenreliefstrukturen nicht erreichbar, da die Farbzerlegung durch die physikalischen Grundlagen des Buegungsgitters vorgegeben ist. Bei einem Oberflächenreilief wird also bei der Rekonstruktion mit weißem Licht stets ein Regenbogen-Farbspektrum erzeugt. Nach der vorteilhaften Weiterbildung des erfindungsgemäßen Verfahens sind demgegenüber kontrollierte Farbeffekte möglich.

Das Dokument oder Sicherheitselement kann dadurch hergestellt werden, daß aus einem Oberflächenrelief ein Volumenhologramm durch einen optischen Kopiervorgang hergestellt wird. Das Oberflächenrelief wird als sogenannter Master verwendet. Durch einen optischen Kopiervorgang wird daraus das Volumenhologramm hergestellt. Es ist aber auch möglich, das Volumenhologramm durch eine direkte Belichtung herzustellen.

Zur Erläuterung der Erfindung zeigt
- Fig. 1: ein Hologramm, das als Oberflächenrelief ausgestaltet ist, und
- Fig. 2: einen Schnitt durch ein Volumenhologramm.

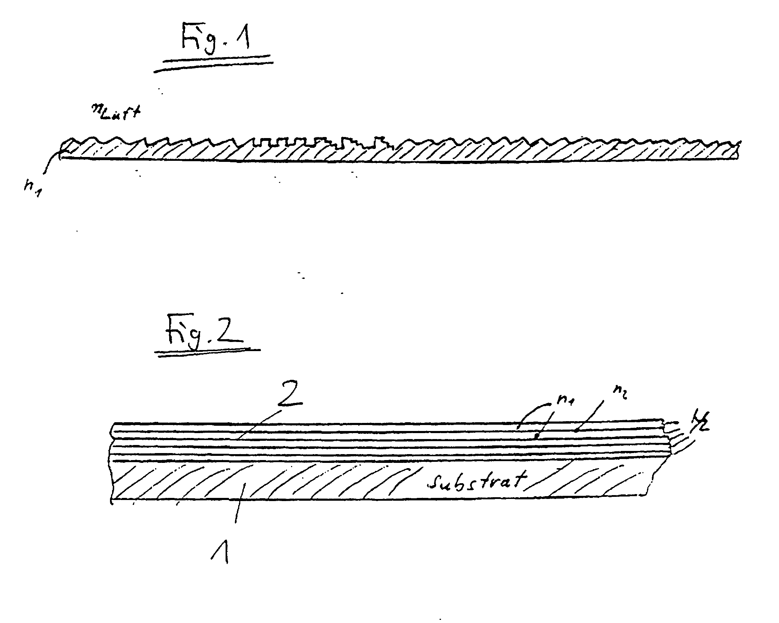

Das in Fig. 1 gezeigte Oberflächenrelief kann als Sicherheitselement auf ein Dokument aufgebracht werden. Die Information des Hologramms ist in der Oberflächenstruktur gespeichert.

Fig. 2 zeigt ein Dokument mit einem Substrat 1, auf das ein Volumenhologramm 2 aufgebracht ist. Durch die Belichtung entstehen in dem Filmmaterial Bragg'sche Netzebenen n₁, n₂ usw., die im Abstand von λ/2 angeordnet sind, wobei λ die Wellenlänge des verwendeten Lichts bedeutet, und die holografische Information beinhalten.

## Patentansprüche

1. Sicherheitselement für ein Dokument mit einem Substrat, wobei das Sicherheitselement ein Volumenhologramm umfaßt,
**dadurch gekennzeichnet,**
**daß** in das Volumenhologramm (2) ein kinetischer Effekt eingebracht ist und örtliche Bereiche des Volumenhologramms (2) nach der Aufnahme des Volumenhologramms (2) geschrumpft und/oder geschwollen sind, so daß die Bragg'schen Netzebenen in diesen Bereichen entsprechend verändert sind.

2. Sicherheitselement nach Anspruch 1, **dadurch gekennzeichnet, daß** das Volumenhologramm (2) mit zwei oder mehr verschiedenen Wellenlängen hergestellt worden ist.

3. Dokument mit einem Substrat (1) und einem Sicherheitselement nach einem der Ansprüche 1 oder 2.

4. Verfahren zur Herstellung eines Sicherheitselementes nach einem der Ansprüche 1 oder 2 oder eines Dokumentes nach Anspruch 3, bei dem örtliche Bereiche des Volumenhologramms (2) nach der Aufnahme des Volumenhologramms (2) geschrumpft und/oder geschwollen werden, so daß sich die Bragg'schen Netzebenen in diesen Bereichen entsprechend verändern.

5. Verfahren nach Anspruch 4, bei dem das Volumenhologramm durch einen optischen Kopiervorgang aus einem Oberflächenrelief hergestellt wird.

6. Verfahren nach Anspruch 4, bei dem das Volumenhologramm durch direkte Belichtung hergestellt wird.

7. Verfahren nach Anspruch 6, bei dem das Volumenhologramm durch direkte Belichtung mit zwei oder mehr Wellenlängen hergestellt wird.

## Claims

1. A security element for a document with a substrate, whereby the security element includes a volume hologram,
**characterised in that**
a kinetic effect is introduced into the volume hologram (2) and local areas of the volume hologram (2) are shrunk and/or swollen after the recording of the volume hologram (2), so that the Bragg network planes in these regions are correspondingly changed.

2. The security element according to claim 1, **characterised in that** the volume hologram (2) has been produced with two or more different wavelengths.

3. A document with a substrate (1) and a security element according to any one of claims 1 or 2.

4. A method for the production of a security element according to any one of claims 1 or 2 or a document according to claim 3, in which local areas of the volume hologram (2) are shrunk and/or swollen after the recording of the volume hologram (2), so that the Bragg network planes in these regions are correspondingly changed.

5. The method according to claim 4, in which the volume hologram is produced from a surface relief by an optical copying process.

6. The method according to claim 4, in which the volume hologram is produced by direct light exposure.

7. The method according to claim 6, in which the volume hologram is produced by direct light exposure with two or more wavelengths.

## Revendications

1. Elément de sécurité pour document avec un substrat, l'élément de sécurité comprenant un hologramme en volume,
**caractérisé en ce que**
dans l'hologramme en volume (2) est intégré un effet cinétique et que des zones locales de l'hologramme en volume (2) sont rétractées et/ou gonflées après réception de l'hologramme en volume (2), de sorte que les plans de réseau de Bragg sont modifiés en conséquence dans ces zones.

2. Elément de sécurité selon la revendication 1, **caractérisé en ce que** l'hologramme en volume (2) a été fabriqué avec deux longueurs d'ondes différentes ou plus.

3. Document avec un substrat (1) et un élément de sécurité selon une des revendications 1 ou 2.

4. Procédé pour la fabrication d'un élément de sécurité selon une des revendications 1 ou 2 ou d'un document selon la revendication 3, dans lequel des zones locales de l'hologramme en volume (2) sont rétractées et/ou gonflées après réception de l'hologramme en volume (2), de sorte que les plans de réseau de Bragg se modifient en conséquence dans ces zones.

5. Procédé selon la revendication 4, dans lequel l'hologramme en volume est fabriqué par opération de copie optique à partir d'un relief de surface.

6. Procédé selon la revendication 4, dans lequel l'hologramme en volume est fabriqué par exposition directe.

7. Procédé selon la revendication 6, dans lequel l'hologramme en volume est fabriqué par exposition directe avec deux longueurs d'onde ou plus.
